(19) **Europäisches Patentamt**

**European Patent Office**

**Office européen des brevets**

(11) **EP 0 950 680 B1**

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(51) Int Cl.$^7$: **C08G 77/06**, C08G 77/38

(21) Anmeldenummer: **99101645.2**

(22) Anmeldetag: **04.02.1999**

(54) **Verfahren für kontinuierliche polymeranaloge Umsetzungen**

Continuous polymeranalogue reactions

Réactions polymèreanalogue en continu

(84) Benannte Vertragsstaaten:
**BE DE FR GB IT NL**

(30) Priorität: **16.04.1998 DE 19816921**

(43) Veröffentlichungstag der Anmeldung:
**20.10.1999 Patentblatt 1999/42**

(73) Patentinhaber: **Wacker-Chemie GmbH**
**81737 München (DE)**

(72) Erfinder:
• **Baumann, Frank, Dr.**
**84561 Mehring (DE)**
• **Rothenaicher, Otto**
**84367 Zeilarn (DE)**

• **Deubzer, Bernward, Dr.**
**84489 Burghausen (DE)**
• **Heindl, Monika**
**84533 Haiming (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**WO-A-98/05700**     **DE-A- 2 705 563**
**US-A- 3 853 934**     **US-A- 4 230 892**

**Beschreibung**

Die Erfindung betrifft ein kontinuierliches Verfahren zur polymeranalogen Hydrosilylierung von funktionelle Gruppen tragenden Polyorganosiloxanen mit reaktiven Verbindungen.

Kontinuierliche Verfahren werden in der chemischen Industrie überall dort eingesetzt, wo sie den Batchverfahren aufgrund der besseren Raum-Zeit-Ausbeute, einer erhöhten Flexibilität, aufgrund sicherheitstechnischer Überlegungen, wegen der Produktqualität und/oder der zu bewältigenden Produktmasse überlegen sind. Ein weiterer Vorteil von kontinuierlichen Verfahren ist, daß man durch on-line Analyse die Qualität des erhaltenen Produktes während des laufenden Produktionsprozesses durch Veränderung von Reaktionsparametern, wie z. B Durchflußgeschwindigkeit, Temperatur etc. steuern kann.

Die bisher beschriebenen kontinuierlichen Verfahren in der chemischen Industrie beschreiben die Umsetzung von monomeren Verbindungen zu neuen ebenfalls monomeren Verbindungen oder die Herstellung von Polymeren aus Monomeren und/oder Oligomeren z. B. durch Polykondensation oder Polymerisation.
Beispiele für das erste Verfahren sind aus der Silanchemie die aus M. Bogdan et al., Appl. Organomet. Chem. 1 (3), 1987 S. 267 bis 73 bekannte kontinuierliche Gasphasenhydrosilylierung von Silanen mit organischen Doppel- oder Dreifachbindungen tragenden Verbindungen, z. B. von Trichlorsilan mit Acetylen. Bei diesen Verfahren sind die Edukte immer und meistens auch die Produkte unter Reaktionsbedingungen gasförmige oder niederviskose Verbindungen. Bei flüchtigen Edukten (Sdpkt. < 200 °C bei 1 mbar Druck) muß ein nicht abreagierter Eduktanteil bei der Verwendung von sogenannten Loop-Reaktoren wieder in den Reaktionskreislauf zurückgeführt werden. Das führt z. B. zu einer geringen Raum-Zeit-Ausbeute und zu einer längeren mittleren Verweildauer und einer längeren thermischen Belastung des Produktes.

Für die Polymerherstellung gibt es ebenfalls eine Reihe verschiedener kontinuierlicher Verfahren. So ist beispielsweise in EP-A-382 366 die Hydrolyse und Kondensation von Dimethylchlorsilanen zu oligomeren Siloxanen im kontinuierlichen Betrieb beschrieben.

Nicht bekannt sind kontinuierliche Verfahren zu polymeranalogen Umsetzungen, wobei polymeranaloge Umsetzungen als chemische Umsetzungen an Makromolekülen definiert werden, die keine Veränderungen in deren Gerüst bewirken und deren Polymerisationsgrad unverändert lassen. Ein Beispiel hierfür ist die Verseifung von Polyvinylacetat.

Gegenstand der Erfindung ist ein Kontinuierliches Verfahren zur polymeranalogen Hydrosilylierungvon funktionelle Gruppen tragenden Polyorgansiloxanen mit reaktiven Verbindungen, bei dem in einem ersten Schritt aus den funktionelle Gruppen tragenden Polyorgansiloxanen und reaktiven Verbindungen ein Gemisch hergestellt wird und in einem zweiten Schritt das Gemisch kontinuierlich durch eine Reaktionszone geführt wird und dort zur Reaktion gebracht wird, bei dem Polyorganosiloxane eingesetzt werden, welche mindestens eine Einheit der allgemeinen Formel 2

$$A_a E_b SiO_{\frac{4-a-b}{2}} \tag{2},$$

besitzen, in der

A    eine funktionelle Gruppe, die ausgewählt wird aus Gruppen -H, -R$^1$, wobei

R$^1$    einen eine oder mehrere Doppel- und/oder Dreifachbindungen tragenden $C_2$- bis $C_{60}$-Kohlenwasserstoffrest der gegebenenfalls durch Heteroatome, wie O, S, N, und P unterbrochen sein kann und gegebenenfalls substituiert sein kann mit Cyanogruppen, Isocyanatgruppen, Fluor-, Chlor- oder Bromatomen, primären, sekundären oder tertiären Aminogruppen, Carbonsäuregruppen oder deren Derivaten, primären, sekundären oder tertiären Alkoholen oder Phenolen, Aldehyd-, Keto-, Epoxid-, oder Vinylethergruppen bedeutet,

E    eine inerte Gruppe

a    den Wert 1, 2 oder 3 und

b    den Wert 0, 1 oder 2 bedeuten.

Im kontinuierlichen Verfahren werden die Edukte kontinuierlich einmalig durch eine Reaktionszone geführt und kontinuierlich zur Reaktion gebracht. Dabei müssen die funktionelle Gruppen tragenden Polymere mit den reaktiven Verbindungen nicht homogen mischbar sein.

Mit dem vorliegenden Verfahren können die Polymere mit monomeren, oligomeren oder polymeren Reaktanten umgesetzt werden.

Unter Polymer versteht man eine Substanz, deren Moleküle durch vielfache Wiederholung einer oder mehrerer Arten von Atomen oder Atomgruppen (Einheiten) charakterisiert sind. Dabei ist die Zahl der miteinander verknüpften Einheiten so groß, daß sich die Eigenschaften der Substanz durch Hinzufügen oder Abspalten einer oder weniger Einheiten nicht ändern. Insbesondere ist in der vorliegenden Anmeldung ein Polymer im Mittel aus mindestens 8 Einheiten aufgebaut.

Unter Oligomer versteht man eine Substanz, in deren Molekülen wenige Atome oder Atomgruppen (Einheiten) wiederholt miteinander verknüpft sind. Die physikalischen Eigenschaften ändern sich durch Hinzufügen oder Abspalten einer oder weniger Einheiten. Insbesondere ist in der vorliegenden Anmeldung ein Oligomer aus 2 bis 7 Einheiten aufgebaut.

Im Vergleich zum Batchherstellungsverfahren und sogar im Vergleich zu einigen kontinuierlichen Monomerherstellungsverfahren, z. B. der Hydrosilylierung von Silanen, reichen sehr kurze Verweilzeiten der Edukte in der Reaktionszone aus, um einen vollständigen Umsatz in einem Reaktordurchgang zu erreichen. Als vollständig wird der Umsatz bezeichnet, wenn mindestens 95 mol-% der funktionellen Gruppen am Polymergerüst umgesetzt sind.

Kalorimetrische Untersuchungen zeigen, daß im Falle der polymeranalogen Hydrosilylierung bei einem Batchansatz die polymeranaloge Hydrosilylierungsreaktion in einem Zeitfenster von ca. 3 bis 30 Minuten bis zum vollständigen Umsatz liegt. Die jeweilige Zeit ist abhängig von den Edukten. Gegebenenfalls muß beim Batchverfahren nochmals der Katalysator oder ein Edukt nachdosiert werden, um einen vollständigen Umsatz zu erreichen.

Im vorliegenden kontinuierlichen Verfahren liegt aber die mittlere Verweildauer in einem Zeitfenster, das bei vergleichbaren Edukten um den Faktor 5 bis 300 niedriger ist, dies ohne Berücksichtigung der bei einem Batchprozeß lang dauernden Aufheiz- und Abkühlphasen.

Der Hauptgrund für die kurzen Verweilzeiten in der Reaktionszone ist, daß im kontinuierlichen Verfahren in jedem Volumenelement neuer, hochreaktiver Katalysator, sowie thermisch noch nicht-belastete Edukte zur Reaktion gebracht werden. Im Batchprozeß hingegen läuft zwar die Reaktion schnell an, aber die Reaktionsgeschwindigkeit nimmt mit der Zeit ab, da die Aktivität des Katalysators abnimmt und/oder die Edukte während der langen thermischen Belastung chemische Nebenreaktionen eingehen, beispielsweise $\alpha,\beta$-Olefinumlagerung, die sie der eigentlichen polymeranalogen Reaktion entziehen. Ein weiterer Grund ist die wesentlich bessere lokale Durchmischung und gleichmäßigere Temperaturverteilung pro Volumenelement beim vorliegenden kontinuierlichen Verfahren.

Die verkürzte thermische Belastung beim vorliegenden kontinuierlichen Verfahren führt weiter zu einer signifikanten Produktverbesserung.

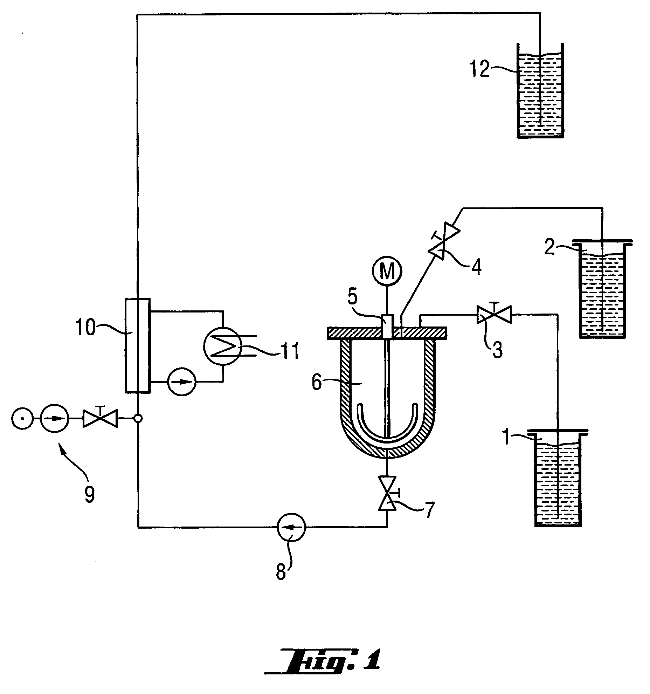

Zur Erläuterung des Verfahrens wird nachstehend auf Fig. 1 Bezug genommen.

Die Edukte und gegebenenfalls der Katalysator werden aus Vorratsbehältern (1,2) kontinuierlich über Ventile (3,4) in einer, mit einer Mischeinrichtung (5) versehenen Vormischkammer (6) oder in die Vormischzone des kontinuierlichen Reaktors dosiert. Nach diesem Mischvorgang wird das Eduktgemisch über Ventil (7) und Dosiereinheit (8) in die Reaktionszone (10) des kontinuierlichen Reaktors gefördert.. Beim Durchlaufen der Reaktionszone (10) erreicht das Eduktgemisch die Reaktionstemperatur, reagiert ab und verläßt die Reaktionszone (10) des kontinuierlichen Reaktors wieder. Das Produkt kann gegebenenfalls noch weiteren Verfahrensschritten unterworfen werden, wie z. B. einer Kurzwegdestillation oder einer Filtration. Anschließend wird das Produkt abgekühlt und in'der Vorlage (12) aufgefangen.

Bei katalytischen Verfahren ist eine Katalysatordosierung über Dosiereinheit (9) nötig. Der Katalysator kann dabei flüssig, fest oder in geeigneten Lösemitteln gelöst oder als Festbettkatalysator vorliegen.

Die Dosierung des Katalysators kann bei diesem Verfahren an verschiedenen Orten zu verschiedenen Zeitpunkten kontinuierlich erfolgen. Der Katalysator kann in der Vormischkammer (6) oder in der Vormischzone zugegeben werden oder in der Aufheizzone. In einer dritten Variante kann der Katalysator auch erst nach Erreichen der gewünschten Reaktionstemperatur der Edukte direkt in der Reaktionszone (10) kontinuierlich zudosiert werden. Die Katalysatordosierung kann mit geeigneten Pumpsystemen vonstatten gehen. Geeignete Pumpsysteme sind hierbei z. B. Mikropräzisionsdosierpumpen, Kolbenpumpen etc.. Die Mengen des kontinuierlich zudosierten Katalysators werden dabei z. B. über die freie Wegstrecke der Mikrodosierpumpe exakt definiert. Bei der Verwendung von geeigneten Fließbettkatalysatoren kann die Katalysatordosierung entfallen.

Die Edukte können über Pumpen, Druckleitungen oder Saugleitungen kontinuierlich im benötigten Mengenverhältnis dosiert werden. Die Mengenerfassung kann dabei in Kombination mit Waagen oder Durchflußmeßeinrichtungen bewerkstelligt werden. Die Edukte können dabei Temperaturen haben von -20°C bis 100°C, bevorzugt 0°C und 60°C und besonders bevorzugt 10°C bis 35°C.

Bei der Verwendung von Druckleitungen und Pumpen kann der gesamte Durchflußprozeß mit den Pumpen oder dem Leitungsdruck (z. B. Stickstoffdruckleitung) gesteuert werden, d. h. die Verweildauer der Edukte in der Reaktionszone (10) des kontinuierlichen Reaktors wird über die Pumpgeschwindigkeit oder den anliegenden Leitungsdruck bestimmt.

Bei der Verfahrensvariante mit einer vorgeschalteten, temperierbaren kontinuierlichen Vormischkammer kann die Eduktmischung von einer separaten Pumpe aus in den kontinuierlichen Reaktor gepumpt werden. Bei dieser Variante ist die Steuerung der Verweildauer der Edukte in der Reaktionszone (10) des kontinuierlichen Reaktors mit dieser einen Pumpe möglich.

Die Eduktdosierung ist ebenfalls an verschiedenen Orten, bei unterschiedlichen Temperaturen und Zeitpunkten ähnlich wie bei der Katalysatordosierung möglich.

Die Durchmischung der Edukte in der Mischkammer kann durch geeignete Mischeinrichtungen (5) erfolgen. Geeignete Mischeinrichtungen (5) sind z. B. Rührer, Ultraschall etc.. Die Temperatur in der Vormischkammer (6) kann dabei frei gewählt werden. Bevorzugt ist 10°C bis 35°C.

Im kontinuierlichen Reaktor kann Durchmischung erfolgen z. B. durch statische Mischer oder aktive Mischung durch parallel zur Längsachse des Reaktorgefäßes laufende Rührwerkzeuge. Diese Rührwerkzeuge können extern angetrieben oder durch die vorbeifließende Flüssigkeit in Bewegung versetzt werden. Durchmischungs- und Verwirbelungseffekte im kontinuierlichen Reaktor können auch durch fest eingebaute oder wechselbare Trombenstörer an der Wandung des Reaktors erreicht werden. Im kontinuierlichen Reaktor kann die Durchmischung auch mittels eingesetzter Füllkörper erfolgen. Geeignete Füllkörper sind z. B. Glaskugeln, Keramik- oder Glashohlkörper, Metallspäne etc..

Verwendbar sind alle gängigen Reaktorgeometrien und Formen wie diese zum Beispiel in Kirk-Othmer, Encyclopedia of Chemical Technology, J. Wiley & Sons, 4. Ausgabe, Band 20, Seite 1007 bis 1059 beschrieben sind. Besonders bevorzugt ist eine zylindrische Reaktorform, wobei das Verhältnis Durchmesser zu Länge beliebig variieren kann, wie z. B. von 1 zu 10 bis 1 zu 2500. Die Stellung des Reaktors ist beliebig. Das Material des Reaktors kann von Metall, wie Chrom - Vanadium - Stahl - Reaktoren, emaillierten Stahl-Raktoren bis hin zu Glasreaktoren variieren.

Der Reaktor wird in einem Temperaturbereich von -50°C bis + 400°C betrieben. Bevorzugt von 0°C bis 250°C und besonders bevorzugt von 60°C und 200°C. Die Temperierung kann durch geeignete Temperierungseinrichtungen (11) erfolgen. Geeignete Temperierungseinrichtungen (11) sind dabei Ölkreislauf zum Heizen und Kühlen, oder zwei unabhängige Kühl- und Heizkreisläufe auf Öl- oder Solebasis, Strahlungsöfen, Heizgebläse und Dampfheizungen aller Art, wie Wasserdampfheizung.

Der Reaktor kann bei den oben angegebenen Betriebstemperaturen in einem absoluten Druckbereich von Vakuum, d. h. 1 mbar bis zu 300 Bar, gefahren werden.

Der Durchsatz, d. h. der Durchfluß an Edukt, bzw. Produkt pro Zeiteinheit kann je nach Reaktorgröße, d. h. Reaktorlänge und Durchmesser, Reaktionsparameter, d. h. Reaktionstemperatur, Viskosität der Edukte und des Produkts, Exothermie der Reaktion etc. und Reaktionskinetik von 100 g pro Stunde bis 1000 kg pro Stunde an Edukt variieren. Bevorzugt sind Umsätze von 1 kg pro Stunde bis 500 kg pro Stunde. Besonders bevorzugt sind 10 kg bis 100 kg pro Stunde Durchsatz an Edukt. Die Durchsatzregelung kann wie bereits vorne beschrieben über die kontinuierlichen Dosiereinheiten (8) gesteuert werden. Eine weitere Möglichkeit der Durchsatzregulierung an Edukt ist ein elektronisch ansteuerbares oder manuell bedienbares Auslaßventil oder Regelventil an einer beliebigen Stelle im Reaktor nach der Reaktionszone (10) oder am Ende des Reaktors. Hierbei müssen dann die Fördereinrichtungen, wie Pumpen, Druckleitungen etc. nicht nur gegen die Viskosität der Edukte und Produkte sondern auch gegen einen bestimmten konstanten, frei einstellbaren Druck des eingebauten Regelventils fördern. Diese Art der Durchflußregelung ist besonders bevorzugt.

Optional kann nach der Reaktionszone eine beliebige Temperierzone angeschlossen sein, um die erhaltenen Produkte auf eine für die weitere Verarbeitung oder Verfahrensschritte optimale Temperatur einzustellen.

Die Produktqualität wird vorzugsweise ständig durch "on-line"-Meßmethoden überwacht. Geeignete Meßmethoden sind alle, die in ausreichend kurzer Zeit den Umsatz der Reaktion detektieren können. Dies sind z. B. spektroskopische Meßverfahren, wie Nah-Infrarot-Spektroskopie, FT-IR-Spektroskopie, Raman- und FT-Ramanspektroskopie.

Das im ersten Schritt des vorliegenden kontinuierlichen Verfahrens hergestellte Gemisch ist vorzugsweise bei den in der Reaktionszone (10) vorherrschenden Bedingungen flüssig. Vorzugsweise weist das Gemisch eine Viskosität von höchstens 10.000 mPa·s auf.

Beispiele für $R^1$ sind der Ethylen-, Propen- oder Acetylenrest, der Acrylat- oder Methacrylatrest, Ester, Anhydride etc.

Vorzugsweise bedeutet $R^1$ einen gegebenenfalls substituierten $C_1$ bis $C_{12}$-Kohlenwasserstoffrest.

Besonders geeignet für das vorliegende kontinuierliche Verfahren sind die Polyorganosiloxane, bei denen die funktionellen Gruppen **A** die Gruppe -H bedeuten.

Vorzugsweise werden die inerten Gruppen **E** ausgewählt aus gegebenenfalls mit $C_1$-$C_{10}$-Alkoxygruppen, Cyanogruppen oder Fluor-, Chlor- oder Bromatomen substituierten $C_1$- bis $C_{20}$-Kohlenwasserstoffresten.

**Beispiele**

**Beispiel 1) Hydrosilylierung**

Durch einen heizbaren zylindrischen Edelstahlreaktor (V4A-Stahl, eigener Bau) mit einer Länge von 1 m und einem Nennvolumen von 50 ml wird eine Eduktmischung mit Hilfe einer Zahnradpumpe (ISMATEC BVZ) gefördert.

Bei der Verwendung von Katalysatorlösungen wird diese mit einer Mikrodosierpumpe (Havard Apparatus 44) gefördert. Als Katalysatorlösung wird eine 1 Gew.-%ige Lösung von Hexachloroplatinsäure in Isopropanol verwendet. Der Reaktor ist mit ca. 17 g Glasröhren von ca. 0,5 cm Länge und ca. 0,3 cm Durchmesser gefüllt. Im Falle von Festbettkatalysatoren entfällt die Katalysatordosierung und die Füllung des Reaktors mit Glasteilen.

Nach der Reaktionszone wird das Produkt mit einem Kühler auf Raumtemperatur abgekühlt und in einem Produktbehälter gesammelt.

Die eingesetzten Edukte, Lösemittel, Katalysatoren, die Herstellungsbedingungen, wie Durchfluß pro Zeiteinheit, Reaktionstemperatur ($T_{Reaktor}$), Verweilzeit im Reaktor ($t_{ver}$) und die so hergestellten Produkte sind unten tabellarisch zusammengestellt.

Tabelle 1:

| homogene kontinuierliche Hydrosilylierung | | | | | | |
|---|---|---|---|---|---|---|
| **Si-H- Edukt** | **α-Vinyl Edukt** | **Katalysator [ppm]** | **Fluß [g/min ]** | **$t_{ver}$ [5)] [min]** | **$T_{Reaktor}$ [°C]** | **Produkt gruppe** |
| Siliconöl 1 | Allylalkohol | 20 ppm | 60 | 0,7 | 120 | Carbinolsiloxanöl |
| Siliconöl 2 | Dito | 20 ppm | 70 | 0,6 | 125 | Dito |
| Siliconöl 1 | Dito | Festbett 1 | 50 | 0,85 | 125 | Dito |
| Siliconöl 1 | Dito | Festbett 2 | 50 | 0,85 | 120 | Dito |
| Siliconöl 1 | Dito | Festbett 3 | 50 | 0,85 | 120 | Dito |
| | | | | | | |
| Siliconöl 1 | Triallylamin | 100 ppm | 40 | 0,95 | 130 | Aminosiloxan |
| Siliconöl 2 | Dito | 10.0 | 40 | 0,95 | 130 | Dito |
| Siliconöl 2 | Dito | Festbett 3 | 40 | 0,95 | 130 | Dito |
| | | | | | | |
| Siliconöl 1 Toluol | Allyl-Polyethylenoxid [1)] | 30 | 40 | 0,95 | 145 | (EO)-Copolymer |
| Dito | Dito | FestBett 3 | 60 | 0,7 | 145 | Dito |
| Siliconöl 2 | Dito | 30 | 45 | 0.95 | 150 | Dito |
| Siliconöl 2 | Allyl-Polypropylenoxid [2)] | 30 | 40 | 0,95 | 140 | (PO)-Copolymer |
| Siliconöl 1 | Dito | Festbett 2 | 20 | 1,9 | 140 | Dito |
| Silconöl 3 | Dito | Festbett 3 | 40 | 0.95 | 130 | Dito |
| | | | | | | |
| Siliconöl 2 | Allyglycidether | 15 | 100 | 0,42 | 120 | Epoxysiloxan |

Siliconöl 1: $HMe_2SiO(Me_2SiO)_{30}SiMe_2H$
Siliconöl 2: $Me_3SiO(Me_2SiO)_{25}(HMeSiO)_4SiMe_3$
Siliconöl 3: $Me_3SiO(HMeSiO)_{50}SiMe_3$
Siliconöl 4: $Me_3SiO(Me_2SiO)_{100}(MeSi(CH=CH_2)O)_6SiMe_3$
Feystbettkatalysator 1: 5 Gew.-% Platin auf Aluminiumoxid, beziehbar von der Firma Heraeus, Type Bd 2/28
Festbettkatalysator 2: 5 Gew.-% Platin auf Aktivkohle, beziehbar von der Firma Heraeus, Type Dc13/13
Festbettkatalysator 3: 5 Gew.-% Platin auf Aluminumoxid, beziehbar von der Firma Heraeus, Type K-0156
1) $H_2C=CHCH_2O (CH_2CH_2O)_6OAc$ (Grünau)
2) $H_2C=CHCH_2O(CHCH_3CH2O)_9CH_3$ (BASF)

Tabelle 1: (fortgesetzt)

| homogene kontinuierliche Hydrosilylierung | | | | | | |
|---|---|---|---|---|---|---|
| **Si-H- Edukt** | **α-Vinyl Edukt** | **Katalysator [ppm]** | **Fluß [g/min ]** | **$t_{ver}$ [5)] [min]** | **$T_{Reaktor}$ [°C]** | **Produkt gruppe** |
| Siliconöl 1 | Dito | 15 | 100 | 0,42 | 120 | Dito |
| | | | | | | |
| Siliconöl 2 | Dodecen | 15 | 100 | 0,42 | 120 | Alkylsiloxanöl |
| Dito | Eugenol | Festbett 2 | 100 | 0,42 | 120 | Arylsiloxanöl |
| Siliconöl 3 | Octadecen | 10 | 10 | 4,2 | 200 | Alkylsiloxanöl |
| | | | | | | |
| Siliconöl 1 Butanol | Pluriol 3) | Festbettt 3 | 25 | 1,7 | 130 | Acrylatsiliconöl |
| Triethoxysilan nicht erfindungsgemäss | Pluriol 3) | 100 | 25 | 1,7 | 130 | Acrylatethylenglykoldisilan |
| | | | | | | |
| Dimethyl chlorsilan | Siliconöl 4 | 7,7 | 20 | 2,13 | 120 4) | Verzweigtes Siloxan |
| | | | | | | |
| Siliconöl 2 | Vinylessigsäure-tert-butylester | 25 | 15 | 2,85 | 120 | Carbonsäuresiliconöl-Derivate |
| Siliconöl 2 | Allylbernsteinsäureanhydrid | Festbett 3 | 30 | 1,42 | 130 | Dito |

Siliconöl 1: $HMe_2SiO(Me_2SiO)_{30}SiMe_2H$
Siliconöl 2: $Me_3SiO(Me_2SiO)_{25}(HMeSiO)_4SiMe_3$
Siliconöl 3: $Me_3SiO(HMeSiO)_{50}SiMe_3$
Siliconöl 4: $Me_3SiO(Me_2SiO)_{100}(MeSi(CH=CH_2)O)_6SiMe_3$
Feystbettkatalysator 1: 5 Gew.-% Platin auf Aluminiumoxid, beziehbar von der Firma Heraeus, Type Bd 2/28
Festbettkatalysator 2: 5 Gew.-% Platin auf Aktivkohle, beziehbar von der Firma Heraeus, Type Dc13/13
Festbettkatalysator 3: 5 Gew.-% Platin auf Aluminumoxid, beziehbar von der Firma Heraeus, Type K-0156
1) $H_2C=CHCH_2O (CH_2CH_2O)_6OAc$ (Grünau)
3) $(=CCH_2O(CH_2CH_2O)_3OCOCH=CH_2)_2$ (BASF)
4) Reaktion wird bei 5 bar Überdruck gefahren.
5) Die Verweilzeit der Edukte bzw. des Produktes wird nach Gl. 1 berechnet:

$$t_{ver} = (V_{Reaktor} - V_{Füllstoff}) / \rho_{Produkt} \text{ Fluß [min]}$$

mit ρ = Dichte des Produktes in $g/cm^3$
    $V_{Reaktor}$ = Nennvolumen des Reaktors
    $V_{Füllstoff}$ = (Gewicht des Füllstoffes) (Dichte des Füllstoffes)

EP 0 950 680 B1

Die erhaltenen Produkte weisen alle eine Wasserstoffzahl auf, die einem Umsatz größer 95 mol-% an Si-H Gruppen entspricht. Weiter enthalten, die mit.Festbettkatalysatoren hergestellten Verbindungen kein nachweisbares Platin mehr und sind farblose, klare Produkte.

**Beispiel 2) Kontinuierliche Hydrosilylierung mit variabler Eduktdosierung**

Der Reaktoraufbau ist gleich dem in Beispiel 1 beschriebenen. Zusätzlich wird aber noch ein drittes Edukt in den kontinuierlichen Reaktor nach einer Reaktionsstrecke von 65 cm zu den ersten beiden Edukten, die bis dahin schon zu einem nicht isolierten Zwischenprodukt abreagiert haben, zudosiert. Als Katalysatorlösung wird eine 1 Gew. -%ige Lösung von Hexachloroplatinsäure in Isopropanol verwendet.

Tabelle 2:

| kontinuierliche Hydrosilylierung mit zwei sukzessiv dosierten hdrosilylierbaren Edukten | | | | | | |
|---|---|---|---|---|---|---|
| Si-H Edukt | $\alpha$-Vinyl - Edukt 1 | a-Vinyl-Edukt 2 | Kat. [ppm] | $t_{ver}$ [min] | Fluß [g/mi n] | T $_{Reaktor}$ [°C] |
| Siliconöl 3 | $\alpha$-Methylstyrol | Dodecen | 5 | 2,13 | 20 | 200 |
| Siliconöl 3 | Octadecen | Triallylamin | 10 | 4,26 | 10 | 150 |
| Siliconöl 2 | Vinylessig -säure-tert-butylester | 1-Octen | 10 | 4,26 | 10 | 130 |

Die erhaltenen Produkte weisen alle eine Wasserstoffzahl auf, die einem Umsatz größer 96 mol-% an Si-H Gruppen entspricht.
Im $^{29}$Si-NMR wird die quantitaive Si-O-C Verknüpfung nachgewiesen.

**Beispiel 3) Zweistufige Synthese im kontinuierlichen Reaktor**

Verfahren:

Der Reaktoraufbau ist gleich dem im Beispiel 1. Als Katalysatorlösung für die Hydrosilylierung wird eine 1 Gew.-%ige Lösung von Hexachloroplatinsäure in Isopropanol verwendet. Abweichend vom Beispiel 1 wird noch zusätzlich p - Toluolsulfonsäure 5 Gew.-% in Toluol als Katalysator für die Esterspaltung über eine Mikropräzisionspumpe bei ca. einem Drittel der Reaktorlänge zudosiert.

Reaktion:

Im ersten Drittel des Reaktors wird eine Hydrosilylierung durchgeführt. Daran schließt sich ohne Isolierung des Zwischenproduktes eine saure durch p -Toluolsulfonsäure katalysierte Esterhydrolyse unter Butenabspaltung an. Das erhaltene Produkt wird anschließend noch kontinuierlich über eine Kurzweg-destillation gereinigt. Die exakten Reaktionsparameter finden sich in Tab 3.

Tabelle 3:

| Herstellung eines freie Carbonsäuregruppen enthaltenden Siloxanöles | | | | | |
|---|---|---|---|---|---|
| 1.) Schritt | | 2.) Schritt | Reaktionsbedingungen für beide Schritte | | |
| Si-H Edukt | $\alpha$-Olefin-tert-Butylcarbonsäureester | p-TSO$_3$H/Toluol | T $_{Reaktor}$ [°C] | t $_{ver}$ [min] | Fluß [g/min] |
| Siliconöl2 | Vinylessigsäure-tert-butylester (Merk) | 0,1 ml/min | 150 | 8,52 | 5 |
| Siliconöl2 | 1-Undecensäure-tertbutylester | 0,1ml/min | 150 | 8,52 | 5 |

Die Charakterisierung der erhaltenen Produkte wird über $^{1}$H-NMR durchgeführt.

**Patentansprüche**

1. Kontinuierliches Verfahren zur polymeranalogen Hydrosilylierung von funktionelle Gruppen tragenden Polyorgansiloxanen mit reaktiven Verbindungen, bei dem

in einem ersten Schritt aus den funktionelle Gruppen tragenden Polyorgansiloxanen und reaktiven Verbindungen ein Gemisch hergestellt wird und

in einem zweiten Schritt das Gemisch kontinuierlich durch eine Reaktionszone geführt wird und dort zur Reaktion gebracht wird, bei dem Polyorganosiloxane eingesetzt werden, welche mindestens eine Einheit der allgemeinen Formel 2

$$A_a E_b SiO_{\frac{4-a-b}{2}} \qquad (2),$$

besitzen, in der

A  eine funktionelle Gruppe, die ausgewählt wird aus Gruppen -H, -R$^1$, wobei

R$^1$  einen eine oder mehrere Doppel- und/oder Dreifachbindungen tragenden $C_2$- bis $C_{60}$-Kohlenwasserstoffrest der gegebenenfalls durch Heteroatome, wie O, S, N, und P unterbrochen sein kann und gegebenenfalls substituiert sein kann mit Cyanogruppen, Isocyanatgruppen, Fluor-, Chlor- oder Bromatomen, primären, sekundären oder tertiären Aminogruppen, Carbonsäuregruppen oder deren Derivaten, primären, sekundären oder tertiären Alkoholen oder Phenolen, Aldehyd-, Keto-, Epoxid-, oder Vinylethergruppen bedeutet,

E  eine inerte Gruppe

a  den Wert 1, 2 oder 3 und

b  den Wert 0, 1 oder 2 bedeuten.

2. Verfahren nach Anspruch 1 bei dem die Polyorganosiloxane die funktionellen Gruppen $\equiv$SiH, aufweisen.

3. Verfahren nach Anspruch 1 oder 2, bei dem die inerten Gruppen **E** ausgewählt werden aus gegebenenfalls mit $C_1$-$C_{10}$-Alkoxygruppen, Cyanogruppen oder Fluor-, Chlor- oder Bromatomen substituierten $C_1$- bis $C_{20}$-Kohlenwasserstoffresten.

**Claims**

1. Continuous process for the polymer-analogous hydrosilylation of polyorganosiloxanes bearing functional groups with reactive compounds in which,

in a first step, from the polyorganosiloxanes bearing functional groups and the reactive compounds, a mixture is prepared and

in a second step the mixture is conducted continuously through a reaction zone and brought to reaction there, wherein use is made of polyorganosiloxanes which have at least one unit of the general formula 2

$$A_a E_b SiO_{\frac{4-a-b}{2}} \qquad (2),$$

where

A  is a functional group which is selected from groups -H, -R$^1$, where

R$^1$  is a $C_2$- to $C_{60}$-hydrocarbon radical which bears one or more double and/or triple bonds, may be interrupted by heteroatoms, such as O, S, N, and P, and can be unsubstituted or substituted by cyano groups, isocyanate groups, fluorine, chlorine or bromine, primary, secondary or tertiary amino groups, carboxylic acid groups or derivatives thereof, primary, secondary or tertiary alcohols or phenols, aldehyde, keto, epoxide or vinyl ether groups,

E  is an inert group

a  is 1, 2 or 3 and

b  is 0, 1 or 2.

2. Process according to Claim 1, wherein the polyorganosiloxanes have the functional groups $\equiv$SiH.

**3.** Process according to Claim 1 or 2, wherein the inert groups **E** are selected from $C_1$- to $C_{20}$-hydrocarbon radicals which are unsubstituted or substituted by $C_1$-$C_{10}$-alkoxy groups, cyano groups or fluorine, chlorine or bromine.

**Revendications**

**1.** Procédé continu pour l'hydrosilylation de type polymérisation de polyorganosiloxanes, portant des groupes fonctionnels, avec des composés réactifs, dans lequel on prépare dans une première étape un mélange à partir des polyorganosiloxanes portant des groupes fonctionnels et des composés réactifs, et dans une seconde étape on envoie le mélange en continu dans une zone de réaction et on le met en réaction dans cette zone, dans lequel on utilise des polyorganosiloxanes qui comportent au moins un motif de formule générale 2

$$A_a E_b SiO_{\frac{4-a-b}{2}} \tag{2},$$

dans laquelle

A    représente un groupe fonctionnel qui est choisi parmi les groupes -H, -$R^1$,
$R^1$    représentant un radical hydrocarboné en $C_2$ à $C_{60}$ comportant une ou plusieurs doubles et/ou triples liaisons, qui peut éventuellement être interrompu par des hétéroatomes tels que O, S, N et P et peut éventuellement être substitué par des groupes cyano, des groupes isocyanate, des atomes de fluor, chlore ou brome, des groupes amino primaires, secondaires ou tertiaires, des groupes carboxy ou leurs dérivés, des phénols ou alcools primaires, secondaires ou tertiaires, des groupes aldéhyde, céto, époxy ou éther vinylique,
E    représente un groupe inerte,
a    a la valeur 1, 2 ou 3 et
b    a la valeur 0, 1 ou 2.

**2.** Procédé selon la revendication 1, dans lequel les polyorganosiloxanes comportent les groupes fonctionnels $\equiv$SiH.

**3.** Procédé selon la revendication 1 ou 2, dans lequel les groupes inertes E sont choisis parmi des radicaux hydrocarbonés en $C_1$ à $C_{20}$ éventuellement substitués par des groupes alcoxy en $C_1$-$C_{10}$, des groupes cyano ou des atomes de fluor, chlore ou brome.

*Fig. 1*